# Europäisches Patentamt

# European Patent Office

# Office européen des brevets

(19)

(11) Veröffentlichungsnummer: **0 218 883**
**B1**

(12) ## EUROPÄISCHE PATENTSCHRIFT

(45) Veröffentlichungstag der Patentschrift:
**08.03.89**

(51) Int. Cl.⁴: **F16D 35/00**

(21) Anmeldenummer: **86112141.6**

(22) Anmeldetag: **02.09.86**

(54) **Flüssigkeitsreibungskupplung.**

(30) Priorität: **12.10.85 DE 3536456**

(43) Veröffentlichungstag der Anmeldung:
**22.04.87 Patentblatt 87/17**

(45) Bekanntmachung des Hinweises auf die Patenterteilung:
**08.03.89 Patentblatt 89/10**

(84) Benannte Vertragsstaaten:
**DE FR GB IT SE**

(56) Entgegenhaltungen:
**DE-A- 2 837 636**
**DE-C- 3 041 829**
**FR-A- 1 276 097**
**US-A- 3 910 391**
**US-A- 4 266 645**

(73) Patentinhaber: **Süddeutsche Kühlerfabrik Julius Fr. Behr GmbH & Co. KG, Mauserstrasse 3,
D-7000 Stuttgart 30(DE)**

(72) Erfinder: **Digele, Jörg, Dipl.-Ing.(FH), Weinstrasse 48,
D-7149 Freiberg(DE)**

(74) Vertreter: **Wilhelm, Hans-Herbert, Dr.-Ing. et al, Wilhelm
& Dauster Patentanwälte Hospitalstrasse 8,
D-7000 Stuttgart 1(DE)**

ACTORUM AG

**Beschreibung**

Die Erfindung betrifft eine Flüssigkeitsreibungskupplung mit einer Topfscheibe und mit einem die Topfscheibe unter Bildung eines Arbeitsspaltes umgebenden Gehäuse, das drehbar gegenüber der Topfscheibe gelagert ist und an einer dem Umfang der Topfscheibe gegenüberliegenden Wand eine Sammelnut zur Rückführung von Kupplungsflüssigkeit aus dem Arbeitsraum in eine Vorratskammer aufweist, die dem Arbeitsraum axial vorgelagert ist und über eine steuerbare Öffnung zur Zufuhr von Kupplungsflüssigkeit mit dem Arbeitsraum in Verbindung steht, wobei zwischen Umfang der Topfscheibe und angrenzendem Gehäuse gewindeartige Rillen zur Förderung der Kupplungsflüssigkeit zur Sammelnut vorgesehen sind.

Eine Flüssigkeitsreibungskupplung dieser Art ist bekannt (DE-A 3 041 829). Bei dieser Bauart ist die Sammelnut an dem der Vorratskammer zugewandten Ende des Umfanges einer Topfscheibe angeordnet und über einen in sie hereinragenden Staukörper mit einem Verbindungskanal an die Vorratskammer angeschlossen. Die gewindeartigen Rillen weisen eine solche Steigung auf, daß bei der Drehung der Topfscheibe die sich im Arbeitsspalt zwischen Gehäuse und Umfang der Topfscheibe befindliche Flüssigkeit zur Sammelnut gefördert wird. Die Flüssigkeit wird in dieser Nut durch den Staukörper aufgestaut und wirksam in die Vorratskammer zurückgefördert. Die Zufuhr von Kupplungsflüssigkeit in den Arbeitsraum wird über einen, vorzugsweise temperaturabhängig betätigten Ventilhebel vorgenommen, der eine Öffnung in der Trennwand zwischen Vorratskammer und Arbeitsraum freigibt oder verschließt.

Ein gewisser Nachteil dieser bekannten Bauarten ist die relativ aufwendige Herstellung des Staukörpers und seine Einpassung in die Sammelnut und in das Gehäuse. Die hierfür einzuhaltenden Toleranzen erhöhen den Herstellungsaufwand. Für manche Anwendungsfälle ist außerdem das Schaltverhalten der Kupplung zu abrupt. Bauartbedingt wird nämlich ein schnelles Zu- und Abschalten der Kupplung erreicht, was in manchen Fällen durch eine langsamer zu- und abschaltende und damit weicher arbeitende Kupplung ersetzt sein sollte.

Der Erfindung liegt die Aufgabe zugrunde, eine Kupplung der eingangs genannten Art so auszubilden, daß sie ein verbessertes Regelverhalten erhält, insbesondere ein weicheres Zu- und Abschalten ermöglicht.

Die Erfindung besteht bei einer Flüssigkeitsreibungskupplung der eingangs genannten Art darin, daß die Sammelnut zwischen beidseitig axial angrenzenden Abschnitten mit Rillen liegt, die mit gegenläufiger Steigung versehen sind. Durch diese Ausgestaltung wird Kupplungsflüssigkeit durch die Relativdrehung zwischen Gehäuse und Topfscheibe aufgrund hydrodynamischer Erscheinungen zur Sammelnut gefördert. Dabei entsteht in dieser ein Druckanstieg, der ausreicht, um die erwünschte Rückförderung in die Vorratskammer vorzunehmen, ohne einen Staukörper anordnen zu müssen.

Gegenläufige Gewinderillen am Umfang einer Kupplungsscheibe einer Flüssigkeitsreibungskupplung sind zwar bekannt (US-A 4 266 645). Die Rillen dienen dort aber lediglich dazu, Kupplungsflüssigkeit von einem zentralen Zufuhrkanal aus in Richtung zu den Enden des Umfanges der Kupplungsscheibe zu verteilen und im Kreislauf zu fördern, jedoch nicht dazu, Kupplungsflüssigkeit zu sammeln und in eine Vorratskammer zurück zu fördern. Daß dies in einfacher Weise möglich ist und zu einer Reihe von Vorteilen führt, ist eine Erkenntnis der vorliegenden Erfindung.

Vorteilhaft ist es, wenn die Abschnitte mit den Rillen am Umfang der Topfscheibe vorgesehen sind und wenn zwischen diesen Abschnitten ein Einstich vorgesehen ist, der einen Auslauf für das Herstellungswerkzeug für die Rillen bildet. Wird die Sammelnut in die Mitte der Topfscheibe, d. h. jeweils zwischen gleich große axiale Abschnitte mit Rillen gelegt und wird das Maß der Steigung der beiden gegenläufigen Gewinde gleich groß gewählt, bildet sich in der Sammelnut ein maximaler Druck. Die Anordnung der Abschnitte mit den gewindeartigen Rillen auf der Topfscheibe weist fertigungstechnische Vorteile auf. Zusätzliche Toleranzen für den Einbau von Staukörpern entfallen. Möglich ist allerdings auch, daß die Rillen an der Innenwand des Gehäuses vorgesehen werden. Die Topfscheibe kann dann in einfacher Weise als Tiefziehteil ausgebildet werden.

Die neue Flüssigkeitsreibungskupplung weist auch den Vorteil auf, daß sie mit wesentlich weniger Kupplungsflüssigkeit arbeiten kann. Dies ist darauf zurückzuführen, daß wegen der Anordnung der Sammelnut in der Mitte des Arbeitsspaltes selbst kleinste Ölmengen zwangsweise einen Teil des Arbeitsspaltes durchlaufen müssen, ehe sie wieder abgepumpt werden. Die Kupplung reagiert daher auf kleine Mengen der Kupplungsflüssigkeit, was zu einem weichen Zu- und Abschalten der Kupplung führt. Wegen dieser feindosierten Ölzuführung können auch stabile Zwischendrehzahlen eingehalten werden.

Bei der neuen Kupplung kann der Rückführkanal auch in sehr einfacher Weise im Gehäuse vorgesehen werden. Da dieses gegossen werden kann, kann auch der von der Sammelnut ausgehende Rückführkanal mit eingegossen werden, so daß sich ein spanabhebender Bearbeitungsvorgang und eine anschließende Reinigung von Spänen erübrigt.

Die Erfindung ist in der Zeichnung anhand eines Ausführungsbeispieles dargestellt und im folgenden erläutert. Es zeigen:

Fig. 1 einen schematischen Längsschnitt durch eine neue Flüssigkeitsreibungskupplung,

Fig. 2 eine vergrößerte Detaildarstellung eines Umfangbereiches der bei der neuen Kupplung verwendeten Topfscheibe und des angrenzenden Gehäuses,

Fig. 3 die schematische Darstellung der Schalthysterese einer Flüssigkeitsreibungskupplung nach dem Stand der Technik und

Fig. 4 die analoge Darstellung der Schalthysterese bei der neuen Flüssigkeitsreibungskupplung.

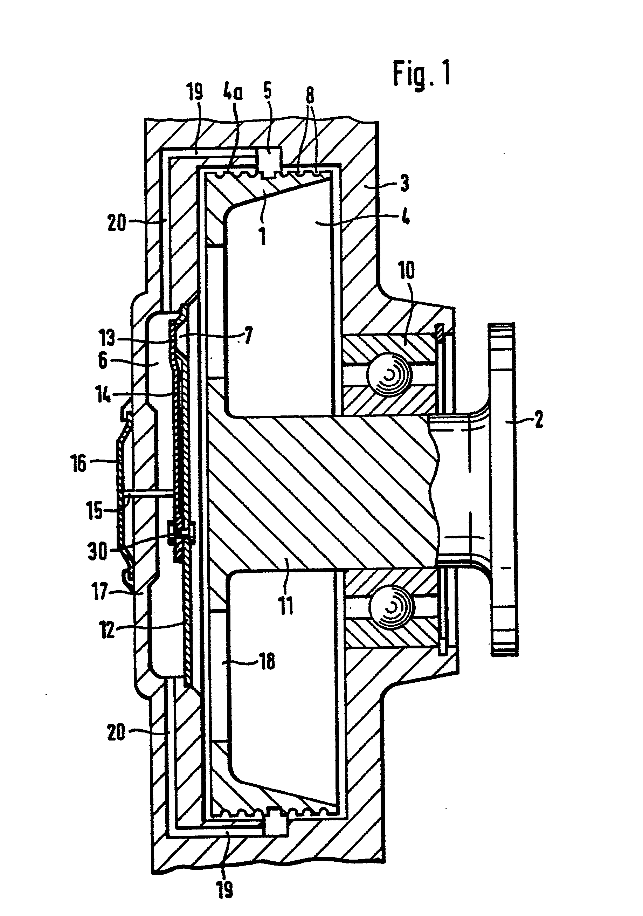

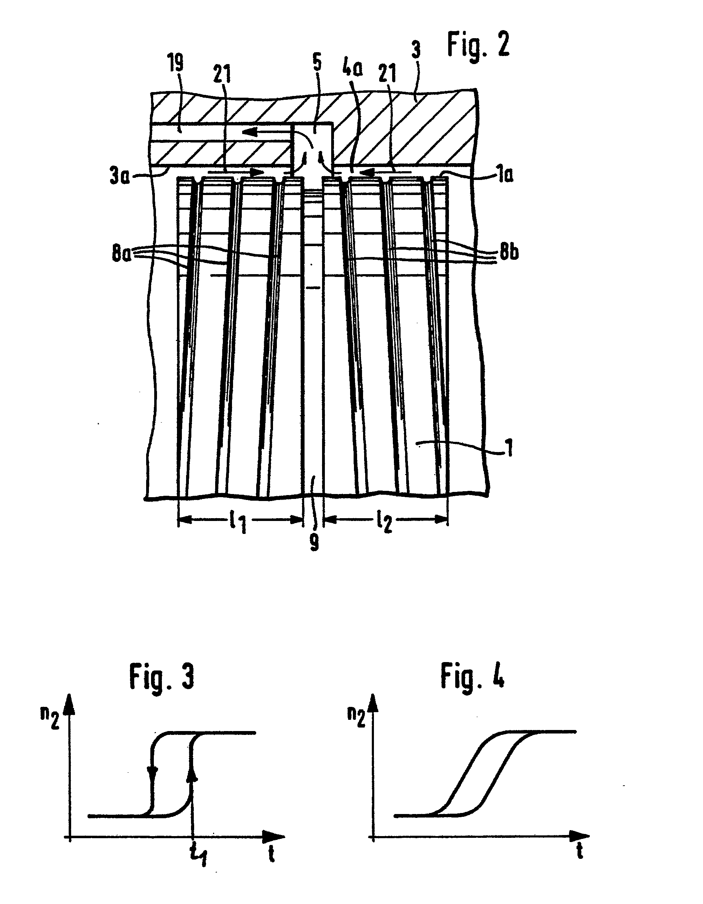

In den Fig. 1 und 2 ist eine Topfscheibe 1 in einem Gehäuse 3 über die Kugellager 10 drehbar angeordnet. Die Topfscheibe 1 ist als Primärteil ausgebildet und besitzt eine zentrale Welle 11, die mit einem Flansch 2 versehen ist, der beispielsweise mit einem Antrieb gekuppelt werden kann. Das drehbar gegenüber der Topfscheibe 1 gelagerte, als Sekundärteil dienende Gehäuse weist einen Arbeitsraum 4 auf, in den die Topfscheibe 1 so eingesetzt ist, daß sie mindestens mit ihrem Umfang 1a einen Arbeitsspalt 4a mit der Innenwand 3a des Gehäuses bildet, in dem bei Relativdrehung zwischen Topfscheibe 1 und Gehäuse 3 über eine sich im Arbeitsraum 4 und in dem Arbeitsspalt 4a befindende Kupplungsflüssigkeit über Flüssigkeitsreibung die eingegebene Antriebskraft auf das Abtriebsteil übertragen werden kann. Ist daher die Topfscheibe 1 das angetriebene Teil, so wird über Flüssigkeitsreibung das Gehäuse 3 mitgenommen, das beispielsweise in bekannter Weise mit den Schaufeln eines Axialventilators für den Kühler eines Kraftfahrzeugmotors bestückt sein kann.

Kupplungsflüssigkeit befindet sich bei ausgeschalteter Kupplung im wesentlichen in einer Vorratskammer 6, die dem Arbeitsraum 4 im Gehäuse 3 axial vorgelagert und durch eine Trennwand 12 von dem Arbeitsraum 4 abgeteilt ist. In der Trennwand ist eine Öffnung 7 vorgesehen, die von einem Ventilteil 13 abgeschlossen oder geöffnet werden kann, das sich am freien Ende eines Federhebels 14 befindet, der über den Niet 30 fest an der Trennwand 12 angebracht ist. Der Federhebel 14 tendiert von Haus aus dazu, sich und den Ventilteil 13 von der Öffnung 7 abzuheben, wird jedoch beim Ausführungsbeispiel über einen Schaltstift 15 im Uhrzeigersinn verschwenkt, der den Deckel 17 des Gehäuses 3 durchdringt und von einem Bimetallstreifen 16 beaufschlagt ist. Die Schwenkbewegung des Hebels 14 und damit das Freigeben oder Verschließen der Öffnung 7 kann daher vom Bimetallstreifen 16 temperaturabhängig gesteuert werden. Kupplungsflüssigkeit durchdringt nach dem Durchströmen der Öffnung 7 die Öffnungen 18 in dem radial verlaufenden Teil der Topfscheibe 1 und dringt in den Arbeitsraum 4 und auch in den radialen Arbeitsspalt 4a zwischen Umfang 1a der Topfscheibe und Innenwand 3a des Gehäuses 3 ein.

Die Rückführung der Kupplungsflüssigkeit in die Vorratskammer erfolgt über eine Sammelnut 5, die im Gehäuse umlaufend angeordnet ist, und über zwei oder mehrere gleichmäßig auf ihrem Umfang verteilte, axial verlaufende Verbindungskanäle 19 und radiale Kanäle 20 zur Vorratskammer 6. Um zu erreichen, daß die Kupplungsflüssigkeit in die Sammelnut 5 gelangt, sind, wie insbesondere Fig. 2 zu entnehmen ist, am Umfang 1a der Topfscheibe 1 jeweils zwei sich über die gleiche axiale Länge erstreckende Abschnitte $l_1$, $l_2$ mit Rillen 8a, 8b vorgesehen. Die gewindeartig verlegten Rillen 8a, 8b besitzen eine gegenläufige, aber gleich große Steigung. In der Mitte zwischen den beiden Abschnitten $l_1$ und $l_2$ ist ein Einstich 9 im Umfang 1a der Topfscheibe 1 vorgesehen, in den die jeweiligen gewindeartigen Rillen von beiden Seiten her einmünden. Dieser Einstich 9 liegt radial der Sammelnut 5 gegenüber.

Die Anordnung der gewindeartigen Rillen in den Abschnitten $l_1$ und $l_2$ wird jeweils so vorgenommen, daß sich die Kupplungsflüssigkeit bei der Drehung der Topfscheibe 1 relativ zum Gehäuse 3 jeweils von beiden Stirnseiten der Topfscheibe 1 her in Richtung der Pfeile 21 zur zentralen Sammelnut 5 bewegt. Die Kupplungsflüssigkeit wird daher durch die rotationsbedingte Förderwirkung der Rillen 8a und 8b in der Sammelnut 5 gestaut und durch den erhöhten Druck in die Rückführkanäle 19, 20 zur Vorratskammer 6 gefördert. Zusätzliche Maßnahmen zur Rückförderung von Kupplungsflüssigkeit sind nicht notwendig.

Die neue Kupplung läßt sich mit wesentlich weniger Kupplungsflüssigkeit betreiben. Es hat sich zum Beispiel gezeigt, daß bei Verwendung von Silikonöl als Kupplungsflüssigkeit sich die Menge der Kupplungsflüssigkeit gegenüber einer herkömmlichen Flüssigkeitsreibungskupplung mit Staukörper um etwa die Hälfte verringern ließ; die Wirkungsweise war gleich gut.

Fig. 3 und 4 zeigen zum Vergleich die Schalthysteresen einer Kupplung bekannter Bauart und einer neuen Kupplung. Aus Fig. 3 wird ersichtlich, daß bekannte Kupplungen zu einem bestimmten Zeitpunkt $t_1$ verhältnismäßig schlagartig zuschalten und ein ähnliches Verhalten auch beim Abschalten aufweisen. Die neue Kupplung dagegen zeigt ein weiches Zuschalten und Abschalten der Kupplung, das für eine Reihe von Anwendungsfällen erwünscht wird. Bedingt ist diese Schalthysterese dadurch, daß immer Kupplungsflüssigkeit durch einen Teil des Arbeitsraumes gefördert wird. Dadurch lassen sich auch Zwischendrehzahlen gut halten.

Es ist natürlich auch möglich, die axialen Abschnitte $l_1$ und $l_2$ mit den Gewinderillen 8a, 8b sowohl hinsichtlich ihrer axialen Erstreckung als auch hinsichtlich ihrer Rillenart und Rillensteigung anders auszubilden. Die zum Einstich 9 symmetrische Ausbildung hat sich aber als besonders zweckmäßig und vorteilhaft – auch in herstellungstechnischer Sicht – erwiesen.

Möglich wäre es auch, durch Verminderung des Wirkungsgrades der Förderrillen die Leerlaufdrehzahl zu erhöhen. Denkbar wäre es auch, die Förderrillen am Innenumfang 3a des Gehäuses 3 vorzusehen und die Topfscheibe als ein Tiefziehteil mit einem zylindrischen Umfang auszubilden.

## Patentansprüche

1. Flüssigkeitsreibungskupplung mit einer Topfscheibe (1) und mit einem die Topfscheibe unter Bildung eines Arbeitsspaltes (4a) umgebenden Gehäuse (3), das drehbar gegenüber der Topfscheibe gelagert ist und an einer dem Umfang (1a) der Topfscheibe gegenüberliegenden Wand (3a) eine Sammelnut (5) zur Rückführung von Kupplungsflüssigkeit aus einem Arbeitsraum (4) in eine Vorratskammer (6) aufweist, die dem Arbeitsraum axial vorgelagert ist und die über eine steuerbare Öffnung (7) zur Zufuhr von Kupplungsflüssigkeit mit dem Arbeitsraum in Verbindung steht, wobei zwischen Umfang der Topfscheibe (1) und angrenzendem Gehäuse (3) gewindeartige Rillen (8a, 8b) zur Förderung der Kupplungsflüssigkeit zur Sammelnut vorgesehen sind, dadurch gekennzeichnet, daß die Sammelnut (5) zwischen beidseitig axial angrenzenden Abschnitten (l₁, l₂) liegt, die mit Rillen (8a, 8b) mit gegenläufiger Steigung versehen sind.

2. Flüssigkeitsreibungskupplung nach Anspruch 1, dadurch gekennzeichnet, daß die Rillen (8a, 8b) am Umfang (1a) der Topfscheibe (1) vorgesehen sind.

3. Flüssigkeitsreibungskupplung nach Anspruch 1 oder 2, dadurch gekennzeichnet, daß zwischen den Abschnitten (l₁, l₂) und den Rillen (8a, 8b) ein Einstich (9) vorgesehen ist.

4. Flüssigkeitsreibungskupplung nach einem der Ansprüche 1 bis 3, dadurch gekennzeichnet, daß der Einstich (9) in der Mitte der beiden sich über die gleiche axiale Länge erstreckenden Abschnitte (l₁, l₂) liegt und daß das Maß der Steigung der Rillen (8a, 8b) gleich groß ist.

5. Flüssigkeitsreibungskupplung nach Anspruch 1, dadurch gekennzeichnet, daß die Abschnitte (l₁, l₂) an der Innenwand (3a) des Gehäuses vorgesehen sind und daß die Topfscheibe (1) als Tiefziehteil ausgebildet ist.

## Claims

1. A fluid friction clutch comprising a cupwheel (1) and, enclosing the cupwheel and forming a working gap (4a), a housing (3) which is mounted to be rotatable in respect of the cupwheel and comprising on a wall (3a) opposite the periphery (1a) of the cupwheel, a collecting groove (5) for returning clutch fluid from a working space (4) to a strorage space (6) which is axially upstream of the working space with which it communicates via a controllable aperture (7) for the feed of clutch fluid, there being disposed between the periphery of the cupwheel (1) and the adjacent housing (3) thread-like grooves (8a, 8b) for conveying the clutch fluid to the collecting groove, characterised in that the collecting groove (5) is disposed between portions (l₁, l₂) which are axially adjacent its two sides and which are provided with grooves (8a, 8b) of opposite pitch.

2. A fluid friction clutch according to Claim 1, characterised in that the grooves (8a, 8b) are provided on the periphery (1a) of the cupwheel (1).

3. A fluid friction clutch according to Claim 1 or 2, characterised in that an indentation (9) is provided between the portions (l₁, l₂) and the grooves (8a, 8b).

4. A fluid friction clutch according to one of Claims 1 to 3, characterised in that the indentation (9) is disposed in the middle of the two portions (l₁, l₂) which extend over the same axial length and in that the extent of the pitch of the grooves (8a, 8b) is the same.

5. A fluid friction clutch according to Claim 1, characterised in that the portions (l₁, l₂) are provided on the inside wall (3a) of the housing and in that the cupwheel (1) is constructed as a deep drawn part.

## Revendications

1. Accouplement à frottement hydraulique comportant un disque en forme de coupelle (1), et un carter (3) qui entoure le disque en forme de coupelle en délimitant une fente de travail (4a), est monté de manière à pouvoir tourner par rapport au disque en forme de coupelle et comporte une gorge de collecte (5) ménagée dans une paroi (3a) située en vis-à-vis de la périphérie (1a) du disque en forme de coupelle et servant à renvoyer un liquide d'accouplement depuis une chambre de travail (4) dans une chambre de stockage (6), qui est disposée axialement en amont de la chambre de travail et est reliée à la chambre de travail par l'intermédiaire d'une ouverture commandable (7) utilisée pour délivrer le liquide d'accouplement, des gorges en forme de filetage (8a, 8b) servant à entraîner le liquide d'accouplement en direction de la gorge de collecte étant prévues entre la périphérie du disque en forme de coupelle (1) et le carter adjacent (3), caractérisé en ce que la gorge de collecte (5) est située entre des sections (l₁, l₂), qui avoisinent axialement, et des deux côtés, la gorge de collecte, et comportent des gorges (8a, 8b) possédant des pentes opposées.

2. Accouplement à frottement hydraulique selon la revendication 1, caractérisé en ce que les gorges (8a, 8b) sont ménagées sur la périphérie (1a) du disque en forme de coupelle (1).

3. Accouplement à frottement hydraulique selon la revendication 1 ou 2, caractérisé en ce qu'une encoche (9) est prévue entre les sections (l₁, l₂) des gorges (8a, 8b).

4. Accouplement à frottement hydraulique selon l'une des revendications 1 à 3, caractérisé en ce que l'encoche (9) est disposée dans la zone médiane entre les deux sections (l₁, l₂), qui s'étendent sur la même longueur axiale, et que la valeur des pentes des gorges (8a, 8b) est la même.

5. Accouplement à frottement hydraulique selon la revendication 1, caractérisé en ce que les sections (l₁, l₂) sont prévues dans la paroi intérieure (3a) du carter et que le disque en forme de coupelle (1) est réalisé sous la forme d'une pièce emboutie.

Fig. 1

Fig. 2

Fig. 3

Fig. 4